# FASCICULE DE BREVET EUROPEEN

(11) **EP 1 378 426 B1**
(45) Date de publication et mention de la délivrance du brevet: **07.11.2007**
(21) Numéro de dépôt: 03291376.6
(22) Date de dépôt: 10.06.2003
(51) Int. Cl.: B62D 55/04, B62D 55/24, B62D 55/10

(54) **Dispositif d'entrainement à chenille souple pour véhicule à moteur et véhicule ainsi obtenu**
Baupakket für Gummiraupe für Kraftfahrzeug, und derart ausgestattetes Kraftfahrzeug
Kit for elastomeric track for motor vehicle, and vehicle equipped with such a kit

(30) Priorité: 05.07.2002 FR 0208490
(43) Date de publication de la demande: 07.01.2004
(73) Titulaire: OTICO, 77650 Longueville (FR)
(72) Inventeur: Phely, Olivier, 77520 Thenisy (FR); Piou, Denis, 89340 Villeblevin (FR)
(74) Mandataire: Bezault, Jean

(56) Documents cités:
- EP-A- 1 110 851
- DE-A- 1 630 206
- US-A- 5 273 126
- US-A- 5 343 960
- US-A1- 2002 017 403

## Description

L'invention se rapporte aux véhicules à moteur, notamment aux véhicules tout terrain, tels que les engins agricoles, viticoles et ostréicoles, ou les engins de travaux publics et forestiers.

Les véhicules de ce type sont classiquement équipés de roues à pneumatiques qui ont pour inconvénient d'exercer une pression importante au sol et, par conséquent, de tasser le sol ou d'y créer des sillons ou des ornières, spécialement lorsqu'ils circulent sur un terrain meuble.

Pour éviter cet inconvénient, il est connu de remplacer les pneumatiques classiques par des pneumatiques à basse pression qui génèrent des pressions moins importantes sur le sol. Toutefois, ces pneumatiques sont plus encombrants que les pneumatiques classiques et augmentent l'encombrement, notamment en largeur, du véhicule.

Les véhicules concernés peuvent comprendre, par exemple, un essieu moteur et un essieu directeur, ou encore un essieu moteur et un essieu à la fois moteur et directeur (véhicules du type 4X4).

Il existe aussi des véhicules appelés "mini chargeur" ou "skid steer" (terme anglo-saxon) qui comprennent quatre roues motrices montées sur deux essieux parallèles, et dans lesquels les roues motrices d'un même côté sont entraînées en rotation indépendamment des roues motrices de l'autre côté. Dans de tels véhicules, l'entraînement des quatre roues se fait habituellement par des mécanismes à chaîne agissant sur les quatre roues.

Les deux essieux restent parallèles entre eux, le braquage se faisant en appliquant des vitesses de rotation différentes aux deux roues d'un côté, d'une part, et aux deux roues de l'autre côté, d'autre part. De tels véhicules sont utilisés notamment comme engins de travaux publics et ont l'avantage d'avoir un rayon de braquage très faible, leur permettant de tourner quasiment sur place.

En dehors des véhicules équipés de roues à pneumatiques, il existe aussi des véhicules spécifiques qui, dès l'origine, sont équipés de chenilles, en particulier de chenilles souples en matière de type caoutchouc ou analogue. Ces véhicules à chenilles souples remplacent avantageusement les véhicules à chenilles composées de maillons articulés.

Il a déjà été envisagé de transformer des véhicules équipés de roues à pneumatiques en montant des chenilles en lieu et place de leurs roues d'origine, comme enseigné par exemple par les brevets US 3 737 001, 3 863 726 et 3 939 930. Dans ces véhicules connus, la chenille va remplacer une roue motrice, le véhicule conservant habituellement ses deux roues directrices.

On connaît aussi, d'après le brevet US 5 273 126, un dispositif d'entraînement à chenille souple pour un véhicule à moteur ayant un châssis et au moins un arbre moteur portant un moyeu, ce dispositif comprenant un ensemble prêt à monter, propre à être installé de manière amovible sur un côté du châssis du véhicule, cet ensemble comportant une chenille souple s'enroulant autour d'une roue motrice agencée pour être montée sur le moyeu.

Ce document est pris a base du préambule de la revendication 1.

Ces solutions nécessitent des adaptations importantes, donc coûteuses, qui font que les véhicules ainsi obtenus ne présentent pas d'avantages substantiels par rapport aux véhicules équipés, dès l'origine, de chenilles.

L'invention a notamment pour but de surmonter les inconvénients précités.

Elle vise à procurer un dispositif d'entraînement à chenille souple susceptible de s'adapter à un véhicule à moteur ayant un châssis et au moins un arbre moteur portant un moyeu.

L'invention vise aussi à procurer un tel dispositif d'entraînement qui est susceptible de s'adapter facilement sur des véhicules équipés de roues à pneumatiques, sans nécessiter de transformations importantes.

Elle vise en particulier à procurer un dispositif d'entraînement qui convient tout particulièrement à des véhicules à quatre roues motrices et à deux essieux parallèles, en particulier aux véhicules du type "mini chargeur" ou "skid steer" évoqués précédemment.

L'invention propose à cet effet un dispositif d'entraînement à chenille souple comprenant un ensemble prêt à monter, encore appelé "kit", du type défini dans le brevet US 5 273 126.

Conformément à l'invention, la chenille souple s'enroule aussi autour d'une roue de tension portée par un bâti support, et ce bâti support comprend une partie intérieure agencée pour être fixée de manière amovible sur le châssis à distance de l'arbre moteur, une partie intermédiaire agencée pour porter la roue de tension et une partie extérieure comportant un palier pour la roue motrice.

On procure ainsi un ensemble prêt à être installé sur un côté du châssis d'un véhicule à moteur et comprenant une chenille souple qui s'enroule autour d'une roue motrice et d'une roue de tension. La roue motrice est montée sur un moyeu moteur du véhicule, tandis que la roue de tension est portée par un bâti support qui est fixé sur le châssis et qui en outre assure une structure renforcée formant entraxe entre la roue motrice et la roue de tension.

L'installation d'un tel ensemble est particulièrement simple puisqu'il suffit, à chaque fois, d'enlever les roues situées d'un côté du véhicule, c'est-à-dire habituellement une roue motrice et une autre roue, motrice ou non, éventuellement directrice. Ensuite, il suffit de fixer l'ensemble sur le côté du châssis en montant la roue motrice de la chenille sur le moyeu de la roue motrice supprimée et de fixer le bâti support sur le châssis du véhicule.

La transformation du véhicule s'effectue ainsi dans des conditions simples, et elle présente en outre l'avantage d'être réversible.

Cela signifie qu'il est possible, si l'utilisateur le souhaite ultérieurement, d'enlever les deux ensembles et de remettre en place les roues à pneumatiques d'origine.

Le bâti support constitue une pièce essentielle qui vient s'interposer entre la roue motrice et la roue de tension, tout en étant fixée au châssis du véhicule. Ce bâti support a notamment pour fonctions de protéger la transmission, de rigidifier l'entraxe et de lutter contre les déformations liées à la tension de la chenille souple.

De manière avantageuse, la partie intérieure du bâti support comprend une interface intérieure agencée pour être fixée sur le châssis du véhicule et une interface extérieure agencée pour la fixation de la partie intermédiaire du bâti support. En particulier, la partie intérieure du bâti support peut se fixer en lieu et place d'un porte-moyeu du véhicule, qui est alors démonté au préalable. En revanche, le porte-moyeu, qui supporte le moyeu moteur, reste en place pour assurer la fonction de support du moyeu moteur, sur lequel est fixée la roue motrice servant à l'entraînement de la chenille.

Il est intéressant que l'interface extérieure soit fixée de manière démontable sur la partie intermédiaire pour faciliter la maintenance.

La partie intermédiaire du bâti support comprend avantageusement un mécanisme tendeur et amortisseur agissant sur un porte-roue qui porte la roue de tension. Cette partie intermédiaire du bâti support doit être particulièrement résistante pour supporter les efforts importants de tension de la bande.

Avantageusement, cette partie intermédiaire comprend en outre une poutre solidaire du mécanisme tendeur et amortisseur et un mécanisme à liaison déformable interposé entre la poutre et le porte-roue. A titre d'exemple, ce mécanisme à liaison déformable comprend deux bielles articulées chacune à la poutre et au porte-roue en formant un quadrilatère déformable.

La partie extérieure du bâti support forme une interface entre la partie intermédiaire et la roue motrice. Elle comprend avantageusement un bras ayant une première extrémité agencée pour être fixée de manière amovible sur la partie intermédiaire et une seconde extrémité agencée pour recevoir le palier de roulement.

Différents types de fixations sont envisagés pour assurer la fixation de la partie extérieure sur la partie intermédiaire. Ainsi, la première extrémité du bras peut être fixée par des boulons sur la partie intermédiaire, ce qui procure une liaison particulièrement résistante.

En variante, la première extrémité du bras est fixée par un excentrique sur la partie intermédiaire. Ceci permet d'ajuster la distance entre la partie intermédiaire et l'axe de la roue motrice.

Selon encore une autre caractéristique de l'invention, le dispositif comprend en outre au moins une roue intermédiaire portée par le bâti support et disposée entre la roue motrice et la roue de tension. Dans une forme de réalisation avantageuse, le dispositif comprend un boggie articulé sur le bâti support et portant deux roues intermédiaires.

Sous un autre aspect, l'invention concerne un véhicule équipé d'au moins un dispositif tel que défini précédemment.

Ainsi, le véhicule comprend avantageusement deux ensembles montés respectivement sur deux côtés du châssis (côté droit et côté gauche) et agencés pour être entraînés par deux moyeux reliés à deux arbres d'un même essieu.

Dans la description qui suit, faite seulement à titre d'exemple, on se réfère aux dessins annexés, sur lesquels :
- la figure 1 est une vue de côté d'un dispositif d'entraînement à chenille souple selon une première forme de réalisation de l'invention ;
- la figure 2 est une vue en coupe selon la ligne II-II de la figure 1 ;
- la figure 3 est une vue en coupe prise suivant la ligne III-III de la figure 1, montrant le dispositif avant montage sur le châssis d'un véhicule ;
- la figure 4 est une vue analogue à la figure 3 montrant le dispositif une fois monté sur le châssis ;
- la figure 5 est une vue de côté d'un dispositif d'entraînement à chenilles selon une deuxième forme de réalisation de l'invention ;
- la figure 6 est une vue en coupe selon la ligne VI-VI de la figure 5 ; et
- la figure 7 est une vue en coupe selon la ligne VII-VII de la figure 5.

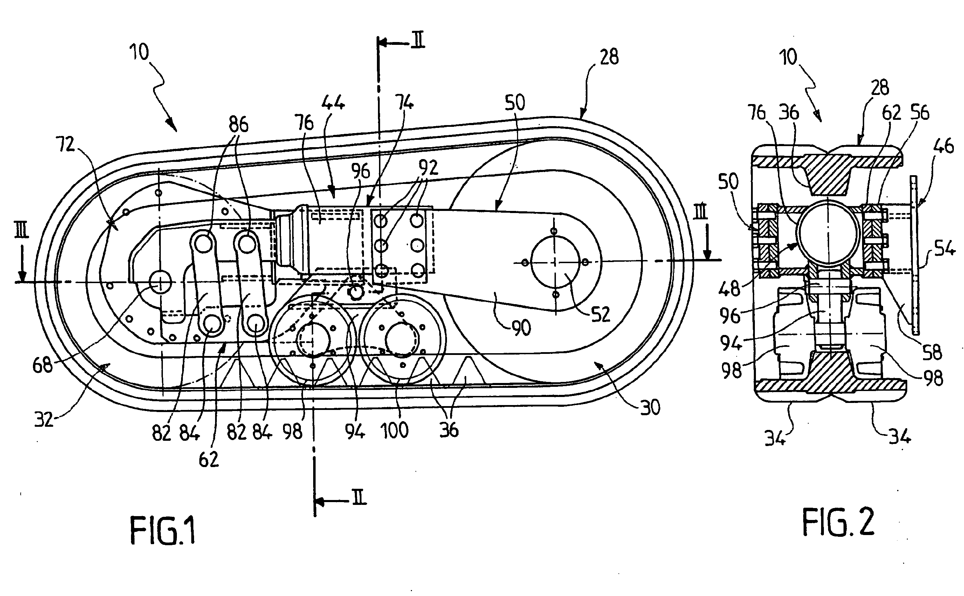

On se réfère d'abord conjointement aux figures 1 à 3 qui montrent un dispositif d'entraînement 10 à chenille souple pour un véhicule à moteur tel que, par exemple, un véhicule à quatre roues motrices du type "mini chargeur" ou "skid steer" (terme anglo-saxon).

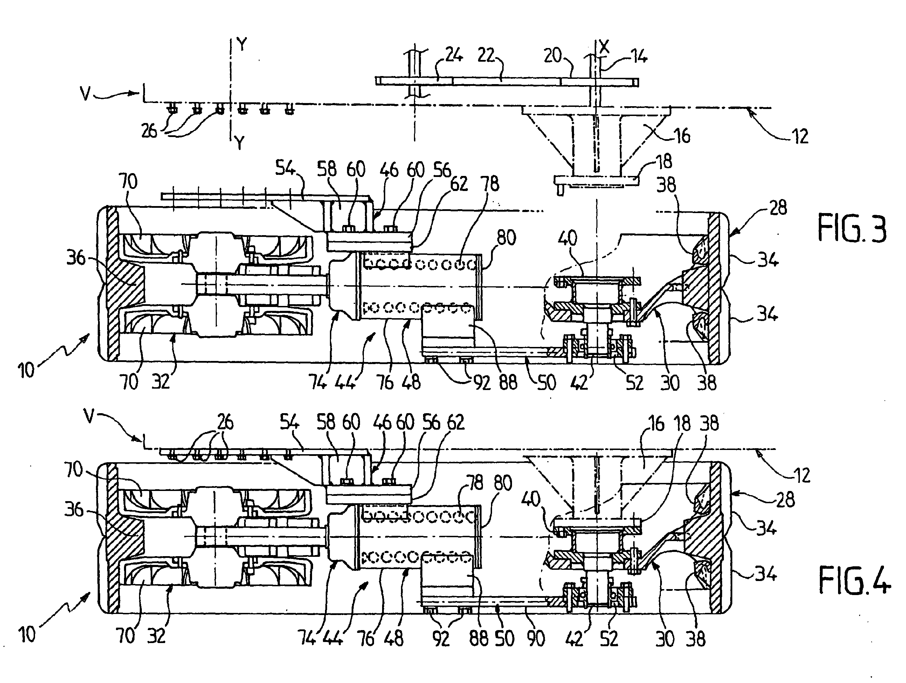

Le dispositif 10 est réalisé sous la forme d'un ensemble prêt à monter, encore appelé "kit", propre à être installé sur le côté, ici le côté gauche d'un châssis 12 (figure 3) d'un véhicule V. Un tel véhicule comprend un essieu moteur d'axe X-X, ici placé à l'arrière, et un autre essieu moteur d'axe Y-Y, ici placé à l'avant, qui portent chacun deux roues (non représentées). Les roues d'un même côté sont entraînées en rotation indépendamment des roues de l'autre côté, sans nécessiter de prévoir un essieu directeur. Il en résulte que les deux essieux ont leurs axes qui restent parallèles en permanence. L'entraînement en rotation des roues s'effectue par des mécanismes à chaînes appropriés.

Comme on peut le voir sur la figure 3, l'essieu arrière comporte un arbre moteur 14 (en réalité un demi-arbre) qui traverse un porte-moyeu 16 fixé sur le côté du châssis 12 et sur lequel est calé en rotation un moyeu 18, qui constitue un moyeu moteur. Sur l'arbre 14 est calée une roue dentée 20 sur laquelle s'enroule une chaîne 22 qui s'enroule aussi sur une autre roue dentée 24 entraînée en rotation par des moyens moteurs (non représentés).

Pour l'installation du dispositif 10 de l'invention, il est nécessaire d'enlever la roue à pneumatique (non représentée) montée à l'origine sur le moyeu 10, ainsi que le porte-moyeu (non représenté) de l'essieu antérieur d'axe Y-Y. Ceci nécessite aussi d'enlever en conséquence le moyeu correspondant et la transmission associée (non représentés). Dans ces conditions, il subsiste sur le châssis 12, dans la région de l'essieu antérieur, une série de boulons 26 qui servaient, à l'origine, à la fixation du porte-moyeu. Comme on le verra plus loin, ces boulons 26 vont servir à la fixation du dispositif 10 sur le côté du châssis 12.

Le dispositif 10 comprend une chenille souple 28 qui s'enroule autour d'une roue motrice 30 et d'une roue de tension 32. La chenille souple 28 est composée d'une bande souple sans fin réalisée avantageusement en un matériau élastomère, par exemple à base de caoutchouc naturel, renforcé intérieurement par des armatures. La bande sans fin comporte extérieurement une surface de roulement munie de crampons 34 (figures 2 et 3). La bande souple sans fin est munie intérieurement d'une rangée de plots 36 (figures 1 à 3) situés dans le sens de la longueur de la bande et distants entre eux d'un pas constant. Ces plots ont sensiblement la forme d'une pyramide, comme décrit dans le brevet FR-A-2 711 959 (93 13211) au nom de la Demanderesse.

La roue 30 est monobloc et comprend deux jantes 38 espacées axialement qui forment des pistes de roulement pour la chenille et qui offrent un passage aux plots 36 de la chenille (figure 3). Des taquets d'entraînement (non représentés) sont disposés entre les jantes pour s'engrener dans les espaces 10 vides délimités entre les plots 36 pour l'entraînement de la chenille.

Les deux jantes 38 sont fixées sur un support 40, encore appelé "trompette", agencé pour être fixé sur le moyeu 18, en lieu et place de la roue à pneumatique qui équipait le véhicule V à l'origine. Le support 40 est adapté à chaque fois au type de moyeu considéré pour pouvoir s'y fixer et il se prolonge à l'extérieur par un pivot 42 qui est lui est solidaire en rotation.

Le dispositif de l'invention comprend en outre un bâti support désigné dans son ensemble par la référence 44 et qui, en vue de dessus, affecte sensiblement la forme d'un S dont les branches sont aplaties. Le bâti support 44 comprend essentiellement trois parties liées entre elles de façon amovible, à savoir une partie intérieure 46 agencée pour être fixée de manière amovible sur le châssis 12 à distance de l'arbre moteur, une partie intermédiaire 48 agencée pour porter la roue de tension 32 et une partie extérieure 50 comportant un palier 52 pour la roue motrice 30.

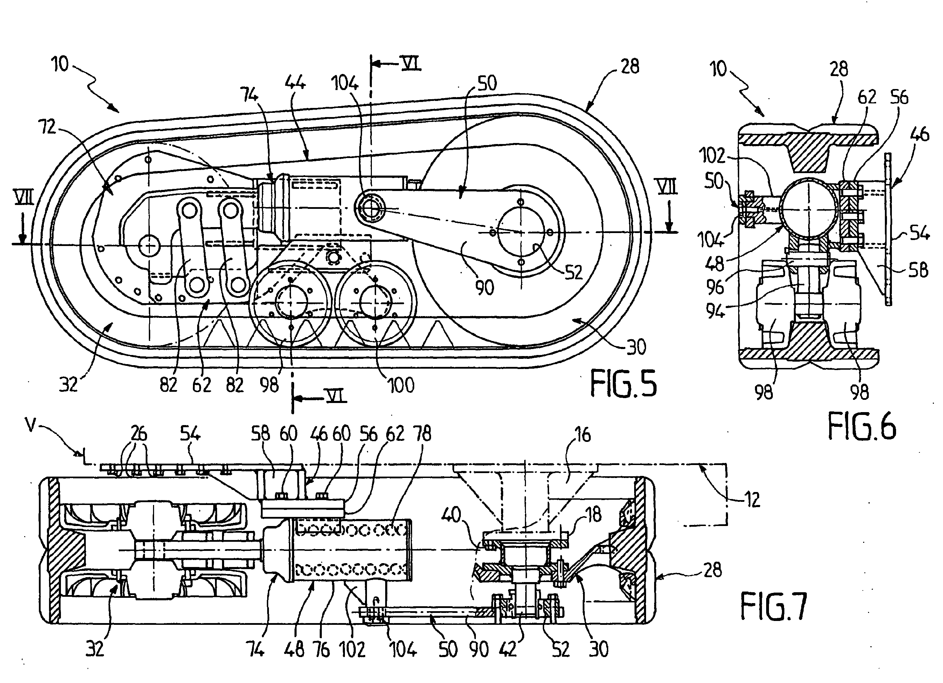

La partie intérieure 46 comprend une interface intérieure 54, en forme de plaque, qui est fixée sur le châssis du véhicule par les boulons 26 mentionnés précédemment. Dans la position de montage (figure 4), l'interface 54 repose à plat contre le côté gauche du châssis et est liée fermement à celui-ci par les boulons 26. En outre, la partie intérieure 46 comprend une interface extérieure 56 en forme de plaque qui s'étend parallèlement à l'interface intérieure 54 et qui est reliée à cette dernière par une entretoise 58. Dans l'exemple, les interfaces 54 et 56 ainsi que l'entretoise 58, qui forment la partie intérieure 46, sont des pièces métalliques assemblées entre elles par soudure. Toutefois la partie intérieure 46 pourrait être réalisée monobloc, sous la forme d'une seule pièce de fonderie.

La partie intermédiaire 48 est fixée de façon amovible sur l'interface 56 au moyen de boulons 60 et elle a pour principale fonction de supporter la roue de tension 32. Elle comprend une poutre 62 que l'on voit mieux sur la figure 1, laquelle est fixée directement sur l'interface 56 par l'intermédiaire des boulons 60.

Comme on peut le voir sur les figures 3 et 4, la roue de tension 32 possède un axe 68 portant deux flasques espacés 70 qui forment des piste de roulement pour la chenille et qui permettent le passage des plots 36 de la chenille. L'axe 68 est monté, par l'intermédiaire de paliers, dans un porte-roue 72 qui est monté mobile par rapport à la poutre 62.

Le porte-roue 72 est relié à un mécanisme tendeur et amortisseur désigné dans son ensemble par la référence 74. Ce mécanisme tendeur et amortisseur est interposé entre la poutre et le porte-roue pour assurer la mise sous tension de la chenille. Ce mécanisme comprend un cylindre 76 fixé longitudinalement et extérieurement à la poutre 62. Le cylindre est traversé par une tige (non représentée) liée au porte-roue et fixée à un vérin (non représenté). Un ressort hélicoïdal 78 entoure la tige et prend appui sur une coupelle 80.

Le porte-roue 72 est relié à la poutre 62 par un mécanisme à liaison déformable qui comprend deux bielles 82 (figure 1) articulées chacune à la poutre 62 par une première articulation 84 et au porte-roue 72 par une deuxième articulation 86, ce qui permet de former un quadrilatère déformable. Un mécanisme à liaison déformable de ce type est décrit dans la demande de brevet français N° 00 13459 déposée le 20 octobre 2000 au nom de la demanderesse. Il en résulte que le porte-roue 72 peut se déplacer vers l'avant ou vers l'arrière par rapport à la poutre 62, tout en étant guidé par rapport à cette dernière, et en étant sollicité par le mécanisme tendeur et amortisseur 74 qui assure la mise sous tension de la chenille 28.

Le cylindre 76 porte une bride 88 (figures 2, 3 et 4) sur laquelle est montée de façon amovible la partie extérieure 50 du bâti support. Cette partie extérieure est réalisée sous la forme d'un bras 90 dont une première extrémité est fixée de façon amovible sur la bride 88 par l'intermédiaire de boulons 92, dans l'exemple au nombre de six, comme on le voit sur la figure 1. Ces boulons traversent des trous oblongs (non représentés) du bras 90 pour permettre un ajustement de la position de ce dernier. Le bras 90 comporte une autre extrémité qui porte le palier 52, lequel coopère avec le pivot 42 (figures 3 et 4).

Ainsi, le bâti support 48 procure plusieurs fonctions. Il permet le montage du dispositif sur le châssis du véhicule. Il protège la transmission et rigidifie l'entr'axe entre la roue motrice et la roue de tension. Le bâti support permet également de lutter contre les déformations liées à la tension de la chenille.

Il est à noter que la partie intérieure 46 peut rester à demeure sur le châssis, le reste du bâti support (partie intermédiaire 48 et partie extérieure 50) étant démonté. Ceci facilite le démontage partiel du dispositif, par exemple pour des raisons de maintenance.

Le dispositif 10 comprend en outre un boggie 94 articulé par un pivot 96 sur le bâti support et supportant, dans l'exemple, deux roues intermédiaires 98 et 100 (figure 1) placées entre la roue motrice et la roue de tension de manière à former appui pour la chenille. En variante, le dispositif pourrait comporter plus de deux roues intermédiaires.

On comprendra que le véhicule V est équipé, du côté opposé (ici du côté droit), d'un dispositif analogue, dont la roue motrice peut être entraînée en rotation indépendamment du dispositif 10 situé du côté gauche.

La forme de réalisation des figures 5 à 7 s'apparente étroitement à celle des figures précédentes. La différence principale résulte dans le fait que le bras support 90 composant la partie extérieure 50 est fixé de manière amovible au cylindre 76 de manière différente. Le cylindre 76 porte une bride 102 sur laquelle est fixée l'extrémité antérieure du bras 50 par l'intermédiaire d'un mécanisme à excentrique 104. Ceci permet d'ajuster la distance séparant le pivot 42 de la bride 102. Bien entendu, cette fixation est moins résistante que la fixation avec des boulons 92 de la forme de réalisation précédente.

Le dispositif de l'invention peut être réalisé avec plusieurs gammes de longueurs en fonction de la longueur du châssis d'origine du véhicule.

Il est susceptible de nombreuses variantes de réalisation quant à la structure de ces différents composants.

En outre, le dispositif de l'invention peut s'adapter à différents types de véhicules, et non de manière limitative à un véhicule du type "mini chargeur" ou "skid-steer" (terme anglo-saxon) tel que décrit précédemment.

## Revendications

1. Dispositif d'entraînement à chenille souple pour un véhicule à moteur ayant un châssis et au moins un arbre moteur portant un moyeu, comprenant un ensemble prêt à monter (10), encore appelé "kit", propre à être installé de manière amovible sur un côté du châssis (12), cet ensemble comportant une chenille souple (28) s'enroulant autour d'une roue motrice (30) agencée pour être montée sur le moyeu (18), **caractérisé en ce que** la chenille souple (28) s'enroule aussi autour d'une roue de tension (32) portée par un bâti support (44), et **en ce que** ce bâti support comprend une partie intérieure (46) agencée pour être fixée de manière amovible sur le châssis (12) à distance de l'arbre moteur, une partie intermédiaire (48) agencée pour porter la roue de tension 32 et une partie extérieure (50) comportant un palier (52) pour la roue motrice (30).

2. Dispositif selon la revendication 1, **caractérisé en ce que** la partie intérieure (46) du bâti support (44) comprend une interface intérieure (54) agencée pour être fixée sur le châssis (12) du véhicule et une interface extérieure (56) agencée pour la fixation de la partie intermédiaire (48) du bâti support.

3. Dispositif selon l'une des revendications 1 et 2, **caractérisé en ce que** la partie intermédiaire (48) du bâti support (44) comprend un mécanisme tendeur et amortisseur (74) agissant sur un porte-roue (62) qui porte la roue de tension (32).

4. Dispositif selon la revendication 3, **caractérisé en ce que** la partie intermédiaire (48) du bâti support (44) comprend en outre une poutre (62) solidaire du mécanisme tendeur et amortisseur (74) et un mécanisme à liaison déformable (82) interposé entre la poutre (62) et le porte-roue (72).

5. Dispositif selon la revendication 4, **caractérisé en ce que** le mécanisme à liaison déformable comprend deux bielles (82) articulées chacune à la poutre (62) et au porte-roue (72) en formant un quadrilatère déformable.

6. Dispositif selon l'une des revendications 1 à 5, **caractérisé en ce que** la partie extérieure (50) du bâti support (44) comprend un bras (90) ayant une première extrémité agencée pour être fixée de manière amovible sur la partie intermédiaire (48) et une seconde extrémité agencée pour recevoir le palier de roulement (52).

7. Dispositif selon la revendication 6, **caractérisé en ce que** la première extrémité du bras (90) est fixée par des boulons (92) sur la partie intermédiaire (48).

8. Dispositif selon la revendication 6, **caractérisé en ce que** la première extrémité du bras (90) est fixée par un excentrique (104) sur la partie intermédiaire (48).

9. Dispositif selon l'une des revendications 1 à 8, **caractérisé en ce qu'**il comprend au moins une roue intermédiaire (98, 100) portée par le bâti support (44) et disposée entre la roue motrice (30) et la roue de tension (32).

10. Dispositif selon la revendication 9, **caractérisé en ce qu'**il comprend un boggie (94) articulé sur le bâti support et portant deux roues intermédiaires (98, 100).

11. Véhicule à moteur équipé d'au moins un dispositif selon l'une des revendications 1 à 10.

12. Véhicule à moteur selon la revendication 11, **caractérisé en ce qu'**il comprend deux ensembles (10) montés respectivement sur deux côtés du châssis (12) et agencés pour être entraînés par deux moyeux moteurs reliés à deux arbres d'un même essieu.

## Claims

1. Drive device with a flexible crawler for a vehicle with a chassis and at least one drive shaft supporting a hub, comprising a ready to fit unit (10), known as a "kit", suitable for installing in a detachable manner on one side of the chassis (12), this unit comprising a flexible crawler (28) wound around a drive wheel (30) intended to be fitted on the hub (18), **characterised in that** the flexible crawler (28) also winds around a tension wheel (32) carried by a support frame (44), and **in that** this support frame comprises an internal part (46) intended to be secured in a detachable manner on the chassis (12) remote from the drive shaft, an intermediate part (48) intended to carry the tension wheel (32) and an external part (5) carrying a bearing (52) for the drive wheel (30).

2. Device according to claim 1, **characterised in that** the internal part (46) of the support frame (44) comprises an internal interface (54) intended to be secured on the vehicle chassis (12) and an external interface (56) intended to secure the intermediate part (48) of the support frame.

3. Device according to one of claims 1 and 2, **characterised in that** the intermediate part (48) of the support frame (44) comprises a tensioning and damping mechanism (74) acting on a wheel support (62) which supports the tension wheel (32).

4. Device according to claim 3, **characterised in that** the intermediate part (48) of the support frame (44) furthermore comprises a beam (62) integral with the tensioning and damping mechanism (74) and a mechanism with a deformable connection (82) interposed between the beam (62) and the wheel support (72).

5. Device according to claim 4, **characterised in that** the mechanism with the deformable connection comprises two connecting rods (82) each articulated with the beam (62) and the wheel support (72) forming a deformable quadrilateral.

6. Device according to one of claims 1 to 5, **characterised in that** the external part (50) of the support frame (44) comprises an arm (90) having a first end intended to be attached in a detachable manner on the intermediate part (48) and a second end intended to receive the rolling bearing (52).

7. Device according to claim 6, **characterised in that** the first end of the arm (90) is secured by bolts (92) on the intermediate part (48).

8. Device according to claim 6, **characterised in that** the first end of the arm (90) is secured by an eccentric (104) on the intermediate part (48).

9. Device according to one of claims 1 to 8, **characterised in that** it comprises at least one intermediate wheel (98, 100) carried by the support frame (44) and arranged between the drive wheel (30) and the tension wheel (32).

10. Device according to claim 9, **characterised in that** it comprises a bogie (94) articulated on the support frame and carrying two intermediate wheels (98, 100).

11. Vehicle fitted with at least one device according to one of claims 1 to 10.

12. Vehicle according to claim 11, **characterised in that** it comprises two units (10) fitted respectively on two sides of the chassis (12) and intended to be driven by two drive hubs connected to two shafts of the same axle.

## Patentansprüche

1. Antriebsvorrichtung mit biegsamer Raupe für ein Kraftfahrzeug, das ein Chassis und wenigstens eine Antriebswelle aufweist, die eine Nabe trägt, mit einer zum Montieren vorbereiteten Anordnung (10), auch "kit" genannt, die geeignet ist, auf entfernbare Weise an einer Seite des Chassis (12) installiert zu werden, wobei diese Anordnung eine biegsame Raupe (28) aufweist, die sich um ein Antriebsrad (30) erstreckt, das angeordnet ist, um an der Nabe (18) montiert zu werden,
**dadurch gekennzeichnet, dass**
die biegsame Raupe (28) sich auch um ein Spannrad (32) erstreckt, das von einem Stützrahmen (44) getragen wird, und dass dieser Stützrahmen einen inneren Abschnitt (46) aufweist, der vorgesehen ist, um auf entfernbare Weise an dem Chassis (12) mit einem Abstand von der Antriebswelle befestigt zu werden, wobei ein Zwischenabschnitt (48) vorgesehen ist, um das Spannrad (32) und einen äußeren Abschnitt (50) zu tragen, der ein Lager (52) für das Antriebsrad (30) aufweist.

2. Vorrichtung nach Anspruch 1, **dadurch gekennzeichnet, dass** der innere Abschnitt (46) des Stützrahmens (44) eine innere Schnittstelle (54), die vorgesehen ist, um an dem Chassis (12) des Fahrzeugs befestigt zu werden, und eine äußere Schnittstelle (56) aufweist, die für das Befestigen des Zwischenabschnitts (48) des Stützrahmens vorgesehen ist.

3. Vorrichtung nach Anspruch 1 oder 2, **dadurch gekennzeichnet, dass** der Zwischenabschnitt (48) des Stützrahmens (44) einen Spann- und Stoßdämpfermechanismus (74) aufweist, der auf ein Stützrad (62) wirkt, das das Spannrad (32) trägt.

4. Vorrichtung nach Anspruch 3, **dadurch gekennzeichnet, dass** der Zwischenabschnitt (48) des Stützrahmens (44) darüber hinaus einen Balken (62) aufweist, der mit dem Spann- und Dämpfermechanismus (74) und einem biegbaren Verbindungsmechanismus (82) verbunden ist, der zwischen dem Balken (62) und dem Stützrad (72) gesetzt ist.

5. Vorrichtung nach Anspruch 4, **dadurch gekennzeichnet, dass** der biegsame Verbindungsmechanismus zwei Lenkstangen (82) aufweist, von denen jede an dem Balken (62) und an dem Stützrad (72) angelenkt ist, unter Bildung eines verformbaren Vierecks.

6. Vorrichtung nach einem der Ansprüche 1 bis 5, **dadurch gekennzeichnet, dass** der äußere Abschnitt (50) des Stützrahmens (44) einen Arm (90) aufweist, der ein erstes Ende hat, das eingerichtet ist, um auf entfernbare Weise an dem Zwischenabschnitt (48) befestigt werden, und ein zweites Ende aufweist, das eingerichtet ist, das Rollenlager (52) aufzunehmen.

7. Vorrichtung nach Anspruch 6, **dadurch gekennzeichnet, dass** das erste Ende des Armes (90) durch Schrauben (92) an dem Zwischenabschnitt (48) befestigt ist.

8. Vorrichtung nach Anspruch 6, **dadurch gekennzeichnet, dass** das erste Ende des Armes (90) durch einen Exzenter (104) an dem Zwischenabschnitt (48) befestigt ist.

9. Vorrichtung nach einem der Ansprüche 1 bis 8, **dadurch gekennzeichnet, dass** sie wenigstens ein Zwischenrad (98, 100) aufweist, das von dem Stützrahmen (44) getragen wird, und zwischen dem Antriebsrad (30) und dem Spannrad (32) angeordnet ist.

10. Vorrichtung nach Anspruch 9, **dadurch gekennzeichnet, dass** sie ein Drehgestell (94) aufweist, das an dem Stützrahmen angelenkt ist, und zwei Zwischenräder (98, 100) trägt.

11. Kraftfahrzeug, ausgerüstet mit wenigstens einer Vorrichtung nach einem der Ansprüche 1 bis 10.

12. Kraftfahrzeug nach Anspruch 11, **dadurch gekennzeichnet, dass** es zwei Anordnungen (10) aufweist, die auf beiden Seiten des Chassis (12) montiert sind und eingerichtet sind, durch zwei Antriebsnaben angetrieben zu werden, die mit zwei Antriebswellen einer selben Achse verbunden sind.
